# EUROPEAN PATENT APPLICATION

(11) **EP 3 508 983 A1**
(43) Date of publication of application: **10.07.2019**
(21) Application number: 17845861.8
(22) Date of filing: 28.06.2017
(51) Int. Cl.: G06F 13/00, F25D 23/00, G06F 3/0481, H04M 1/00, H04Q 9/00

(54) **INFORMATION TERMINAL DEVICE, OPERATING INFORMATION PROVISION SYSTEM, AND OPERATING INFORMATION PROVISION PROGRAM**

(30) Priority: 30.08.2016 JP 2016167447
(71) Applicant: Panasonic Intellectual Property Management Co., Ltd., Osaka-shi, Osaka 540-6207 (JP)
(72) Inventor: HOSOKAWA, Shuya, Osaka-shi, Osaka 540-6207 (JP); HOASHI, Masakazu, Osaka-shi, Osaka 540-6207 (JP); TAKANISHI, Hidetomo, Osaka-shi, Osaka 540-6207 (JP); FUJIOKA, Hiroki, Osaka-shi, Osaka 540-6207 (JP)
(74) Representative: Grünecker Patent- und Rechtsanwälte PartG mbB
(86) International application number: PCT/JP2017/023723
(87) International publication number: WO 2018/042851

(57) **Abstract**

An information terminal device according to the present disclosure includes a reception unit that receives, from a refrigerator, operating information having outline information and analysis information, a display unit that switchably displays a first display screen for displaying the outline information and a second display screen for displaying the analysis information, and a switching unit of switching between the first display screen and the second display screen. The analysis information includes at least some of the outline information. The outline information includes a history of detected values of a temperature detector that detects a temperature of a storeroom of the refrigerator. The analysis information includes the history of the detected values of the temperature detector and a history of operations of a functional component of the refrigerator.

## Description

### TECHNICAL FIELD

The present disclosure relates to an information terminal device that provides operating information of an electrical equipment, an operating information provision system, and an operating information provision program.

### BACKGROUND ART

Conventionally, when a large electrical equipment, such as a refrigerator or an air conditioner, is in failure, a user makes a phone call to a manufacturer or a call center of a sales store and talks about a failure handling method or requests a repair of the electrical equipment. The manufacturer or sales store having received the request for repair dispatches a repair worker to cope with repair or the like.

In recent years, a service has been proposed which facilitates specifying a failure cause of an electrical equipment. In a system that provides the service, an electrical equipment is capable of communicating with a portable terminal device, and the portable terminal is capable of connecting to a server via a network. The portable terminal device executes a failure cause analysis program and displays the failure cause (for example, PTL 1).

Meanwhile, sensibilities of users are diversified and there is a case where a user recognizes a phenomenon, which a repair worker or the like does not recognize as a failure, as a failure. In such a case, a user may consult with a repair worker by using, for example, such a sensory expression that a sound is troublesome, or cooling is somewhat insufficient. To convince such a user whether the phenomenon is a failure or not, the repair worker preferably makes explanation by using objective data.

However, with the service disclosed in PTL 1, a predicted failure cause can be presented to a user, but a case is not considered where the user is not convinced with the presented failure cause. Hence, a user, when not convinced with the presented failure cause, may not be satisfied with the repair worker or the like. That is, the service disclosed in PTL 1 has a room for improvement as a service specifying a failure cause.

### Citation List

### Patent Literature

PTL 1: Unexamined Japanese Patent Publication No. 2002-279091

### SUMMARY OF THE INVENTION

The present disclosure solves the problem and aims at providing a service of improving understanding of a user about at least one of whether or not an electrical equipment is in failure and a presented failure cause. More specifically, the present disclosure aims at providing a portable terminal device or the like that is used as a communication tool for a repair worker and a user.

To solve the conventional problems, an information terminal device according to the present disclosure includes a reception unit that receives, from a refrigerator, operating information having outline information and analysis information of the refrigerator, a display unit that switchably displays a first display screen for displaying the outline information and a second display screen for displaying the analysis information, and a switching unit of switching between the first display screen and the second display screen. The analysis information includes at least part of the outline information. The outline information includes a history of detected values of a temperature detector that is disposed in the refrigerator and detects a temperature of a storeroom of the refrigerator. The analysis information includes the history of the detected values of the temperature detector and a history of operations of a functional component of the refrigerator.

The present disclosure can improve understanding of a user about at least one of whether or not an electrical equipment is in failure and a presented failure cause.

### BRIEF DESCRIPTION OF DRAWINGS

FIG. 1 is a diagram showing an entire configuration of a system in a first exemplary embodiment of the present disclosure.
FIG. 2 is a block diagram of an electrical equipment in the exemplary embodiment.
FIG. 3 is a block diagram of a portable terminal device in the exemplary embodiment.
FIG. 4 is a block diagram of a server in the exemplary embodiment.
FIG. 5 is a front view of a refrigerator in the exemplary embodiment.
FIG. 6 is a front view showing an inside of the refrigerator.
FIG. 7 is a diagram showing a cross section of the refrigerator.
FIG. 8 is a diagram for explaining an arrangement of dampers of the refrigerator.
FIG. 9 is a diagram for explaining a basic information screen of an information screen for repair worker in the exemplary embodiment.
FIG. 10 is a diagram for explaining a detailed information screen of an information screen for repair worker in the exemplary embodiment.
FIG. 11 is a diagram for explaining a basic information screen of an information screen for user in the exemplary embodiment.
FIG. 12 is a diagram for explaining a detailed information screen of an information screen for user in the exemplary embodiment.
FIG. 13 is a diagram showing a processing sequence of an operating information provision system according to the first exemplary embodiment of the present disclosure.
FIG. 14 is a diagram showing an entire configuration of a system in a second exemplary embodiment of the present disclosure.
FIG. 15 is a flowchart showing a system connection operation in the exemplary embodiment.

### DESCRIPTION OF EMBODIMENTS

An information terminal device according to a first disclosure includes a reception unit that receives, from a refrigerator, operating information having outline information and analysis information of the refrigerator, a display unit that switchably displays a first display screen for displaying the outline information and a second display screen for displaying the analysis information, and a switching unit of switching between the first display screen and the second display screen. The analysis information includes at least some of the outline information. The outline information includes a history of detected values of a temperature detector that is provided in the refrigerator and detects a temperature of a storeroom of the refrigerator. The analysis information includes the history of the detected values of the temperature detector and a history of operations of a functional component of the refrigerator.

Thus, the first display screen that is a screen mainly for a user displays, as the outline information, an item as an output of an electrical equipment. Hence, the user can understand at least one of whether or not an electrical equipment is in failure and a failure cause by objective data. Meanwhile, the second display screen that is a screen mainly for a repair worker displays, as the analysis information, data on an operation of a component of the equipment which is an item that the user cannot directly operate. Hence, the repair worker who is a specialist can perform detail analysis about at least one of whether or not the electrical equipment is in failure and a failure cause.

According to a second disclosure, in the first disclosure, the outline information further includes temperature setting information of a storeroom.

Thus, as the outline information, an item that the user can directly operate and an item as the output of the electrical equipment are displayed, and therefore the user can understand at least one of whether or not an electrical equipment is in failure and a failure cause by objective data.

According to a third disclosure, in the first disclosure, the analysis information further includes information on a defrosting operation of the refrigerator.

Thus, the repair worker can perform analysis in more detail about at least one of whether or not an electrical equipment is in failure and a failure cause.

According to a fourth disclosure, in the first disclosure, the analysis information further includes at least one of failure information and information on a repair history of the refrigerator.

Thus, the repair worker can perform analysis in more detail about at least one of whether or not an electrical equipment is in failure and a failure cause.

According to a fifth disclosure, in the first disclosure, an input unit that records at least one of a sound and a video image of the refrigerator is further provided.

Thus, the repair worker can perform audio recording of an operation sound of an electrical equipment or image recording of installation environment of the electrical equipment. Hence, the repair worker can use the operation sound or the image as a reference for failure cause analysis or record the operation sound or the image as evidence.

According to a sixth disclosure, in the first disclosure, an output unit that regenerates at least one of a sound and a video image of the refrigerator that have been recorded in advance is further provided.

Thus, the repair worker can regenerate an operation sound or image of an electrical equipment at the time of normal operation and share information with the user. Hence, the repair worker can analyze a failure cause by quantifying a sound or situation that the user expresses with a sensory expression.

According to a seventh disclosure, there is provided an operating information provision system that includes the information terminal device described in any one of the first to sixth disclosures and a server capable of connecting to the information terminal device.

Thus, it is possible to present a larger number of pieces of information stored in the server than the number of pieces of information stored in the refrigerator.

An operating information provision program according to an eighth disclosure is a program causing an arithmetic unit of an information terminal device that includes a reception unit that receives, from a refrigerator, operating information having outline information and analysis information of the refrigerator, and a display unit that switchably displays a first display screen for displaying the outline information and a second display screen for displaying the analysis information, to execute a switching step of switching between the first display screen and the second display screen. The analysis information includes at least some of the outline information. The outline information includes a history of detected values of a temperature detector that is provided in the refrigerator and detects a temperature of a storeroom of the refrigerator. The analysis information includes the history of the detected values of the temperature detector and a history of operations of a functional component of the refrigerator.

Thus, the first display screen that is a screen mainly for a user displays, as the outline information, an item as an output of an electrical equipment. Hence, the user can understand at least one of whether or not an electrical equipment is in failure and a failure cause by objective data. Meanwhile, the second display screen that is a screen mainly for a repair worker displays, as the analysis information, data on an operation of a component of the equipment which is an item that the user cannot directly operate. Hence, the repair worker who is a specialist can perform detail analysis about at least one of whether or not the electrical equipment is in failure and a failure cause.

Exemplary embodiments of the present disclosure will be described below with reference to drawings. Note that, the exemplary embodiments do not limit the present disclosure.

### (First exemplary embodiment)

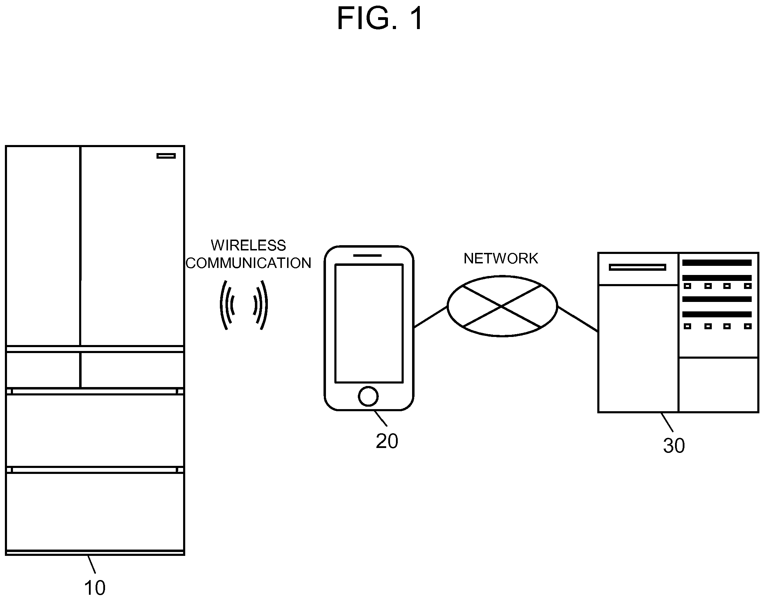

FIG. 1 is a diagram showing an entire configuration of an operating information provision system in a first exemplary embodiment of the present disclosure.

In FIG. 1, electrical equipment 10 is, for example, a so-called white good, such as a refrigerator, a washing machine, or an air conditioner. In FIG. 1, description will be given by use of a refrigerator as an example. Note that, electrical equipment 10 is not limited to a white good but may be an audiovisual (AV) equipment, such as a television, or an electrical equipment for business use, such as an automatic vending machine or a coin laundry.

Portable terminal device 20 is an information terminal device in the present disclosure and is, for example, a smartphone, a tablet terminal, a mobile phone, or the like. Note that, instead of portable terminal device 20, a non-portable electrical equipment, such as a television or a home server, may be used, and a configuration in which portable terminal device 20 and electrical equipment 10 are integrated may be used.

Electrical equipment 10 and portable terminal device 20 can be connected by a wireless communication and can be connected by use of a wireless communication technique, such as Near Field Communication (NFC), for example. Hence, a user of portable terminal device 20 can perform a wireless communication between portable terminal device 20 and electrical equipment 10 by holding portable terminal device 20 over a specific portion of electrical equipment 10.

Note that, for a wireless communication between portable terminal device 20 and electrical equipment 10, a technique that is a wireless communication technique, such as Bluetooth (registered trademark) or Radio Frequency Identification (RFID), which may be considered as one of NFC techniques in a broad sense, may be used. Further, for a wireless communication between portable terminal device 20 and electrical equipment 10, a wireless communication technique, such as Wireless Fidelity (WiFi) (registered trademark, the same applies to the following), may be used. In addition, a communication between portable terminal device 20 and electrical equipment 10 may be a wired communication using a wired communication technique, such as Universal Serial Bus (USB).

Portable terminal device 20 can be connected to server 30 (information processing device) via a network using a public line.

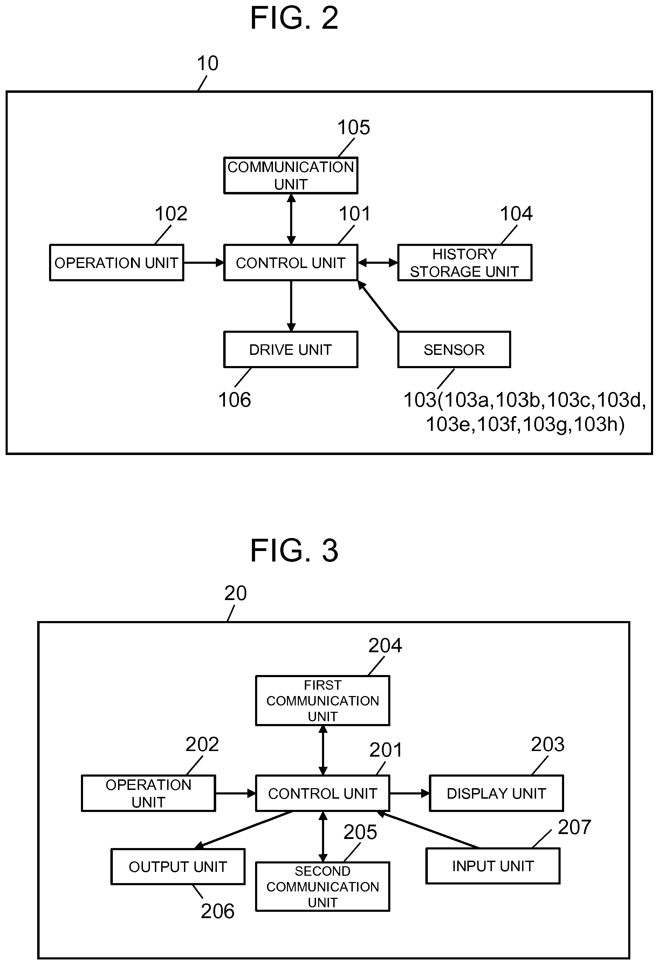

FIG. 2 is a block diagram of electrical equipment 10. In FIG. 2, control unit 101 includes, for example, a microprocessor, such as a CPU (Central Processing Unit), and controls each circuit.

Operation unit 102, for example, includes a plurality of keys and receives operations from a user, for example, operations about setting of electrical equipment 10.

Sensors 103 are, for example, a temperature detector (temperature sensor), a door opening/closing sensor for detecting opening/closing of a door of electrical equipment 10, and a current sensor for detecting an input current to a motor. In a case where electrical equipment 10 is a refrigerator or an air conditioner, a typical example of a motor is a motor included in a compressor. Note that, a driving system of a compressor may be, as described below, a system of changing a drive frequency of a motor by using an inverter circuit as drive unit 106 or a system of a constant speed in which a motor is driven by a rated frequency.

History storage unit 104, for example, includes a nonvolatile memory, such as a flash memory. History storage unit 104 stores, as operating information, information input by operation unit 102, information detected by sensor 103, or the like in association with time information. In addition, when a failure has occurred in electrical equipment 10, history storage unit 104 stores coded information of the failure, as error information.

Communication unit 105 has a function for performing a communication (for example, wireless communication) with portable terminal device 20, and performs a wireless communication with portable terminal device 20 by using a communication technology, for example, NFC described above.

Drive unit 106 is an electric circuit that drives the above-described motor. Drive unit 106 is an inverter circuit and the drive frequency of the motor can be changed.

Note that, electrical equipment 10 may include a display device that displays a current operation state of electrical equipment 10, an operation instruction from a user, or the like, for example, a plurality of light emitting diodes (LEDs) or a liquid crystal display device.

FIG. 3 is a block diagram of portable terminal device 20. In FIG. 3, control unit 201 includes, for example, a microprocessor, such as a CPU (Central Processing Unit), and controls each circuit. Control unit 201 can execute at least a function of a switching unit in the present disclosure. The switching unit may be provided independently of control unit 201. Control unit 201 executes various programs stored in a storage unit (not shown).

Operation unit 202 includes, for example, a touch panel or a plurality of keys, and receives operations from a user.

Display unit 203 includes, for example, a liquid crystal display device, and displays various images, characters, and the like.

First communication unit 204 has a function for performing a communication (for example, wireless communication) with electrical equipment 10, and performs a wireless communication with electrical equipment 10 by using a communication technology, for example, NFC described above. First communication unit 204 has a function as a reception unit that receives operating information of electrical equipment 10 from electrical equipment 10.

Second communication unit 205 performs a wireless communication with server 30 according to a wireless communication standard, such as LTE (Long Term Evolution) or WiFi.

Note that, first communication unit 204 may perform a wireless communication with electrical equipment 10 according to a wireless communication standard, such as WiFi. In addition, first communication unit 204 may perform a communication with electrical equipment 10 in a wired manner.

Note that, portable terminal device 20 may include, as described below, at least one of output unit 206 and input unit 207. Input unit 207 may be provided as a part of control unit 201.

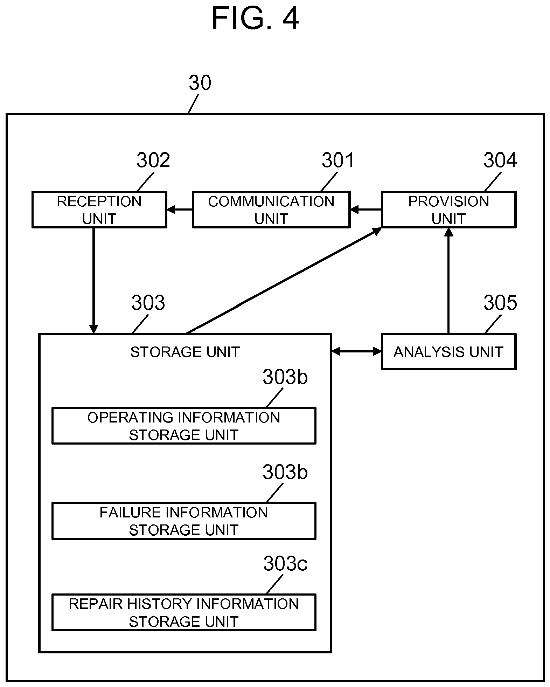

FIG. 4 is a diagram showing an internal configuration of server 30.

In FIG. 4, communication unit 301 performs a communication with portable terminal device 20 or the like via a network using a public line.

Reception unit 302 receives at least one of operating information, failure information, and repair history information of electrical equipment 10 from portable terminal device 20 or the like via communication unit 301.

Storage unit 303 includes operating information storage unit 303a, failure information storage unit 303b, and repair history information storage unit 303c. Each of the operating information storage unit 303a, failure information storage unit 303b, and repair history information storage unit 303c stores operating information, failure information, and repair history information of electrical equipment 10 in association with time information.

The failure information is information about a past failure state of electrical equipment 10. The failure information includes error code information stored in history storage unit 104 of electrical equipment 10. The repair history information is information about a past repair of electrical equipment 10. The time information stored in storage unit 303 may be time information stored in history storage unit 104 of electrical equipment 10 or information about time at which communication unit 301 has received information from portable terminal device 20 or the like.

Provision unit 304 provides, to portable terminal device 20 or the like, at least one of operation state, failure information, and repair history information of electrical equipment 10 that are stored in operation state storage unit 303a, failure information storage unit 303b, and repair history information storage unit 303c in association with time information via communication unit 301.

Analysis unit 305 estimates a failure cause of electrical equipment 10 from the operation state of electrical equipment 10 stored in operation state storage unit 303a. Analysis unit 305 may further estimate a failure cause in consideration of at least one of the failure information and repair history information of electrical equipment 10.

The configuration of electrical equipment 10 will be described below more specifically with a case where electrical equipment 10 is a refrigerator taken as an example.

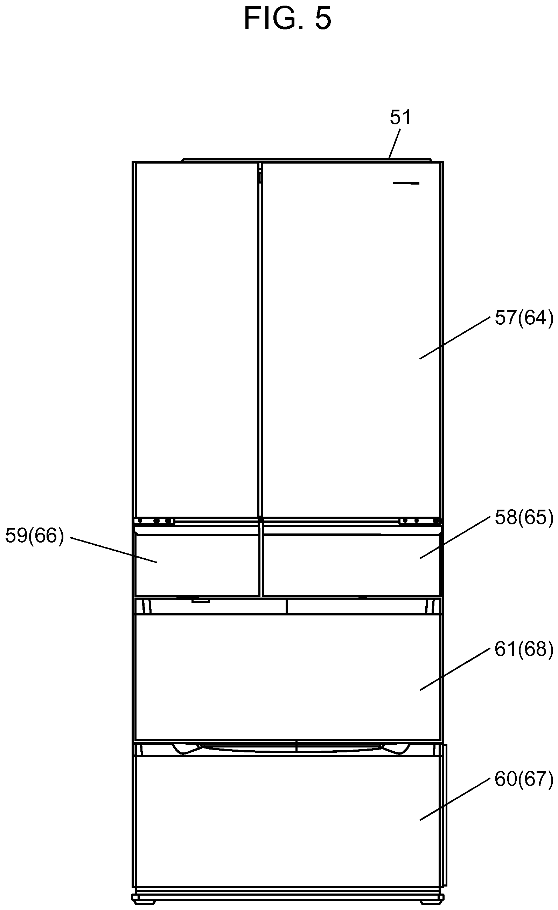

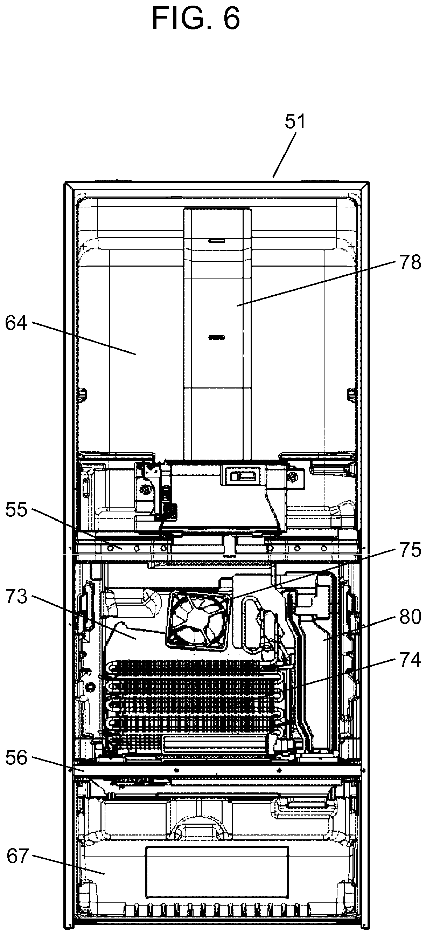

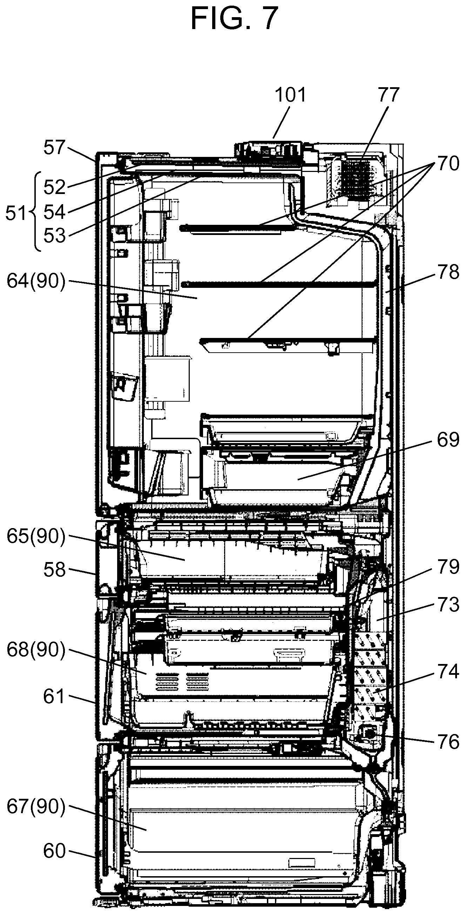

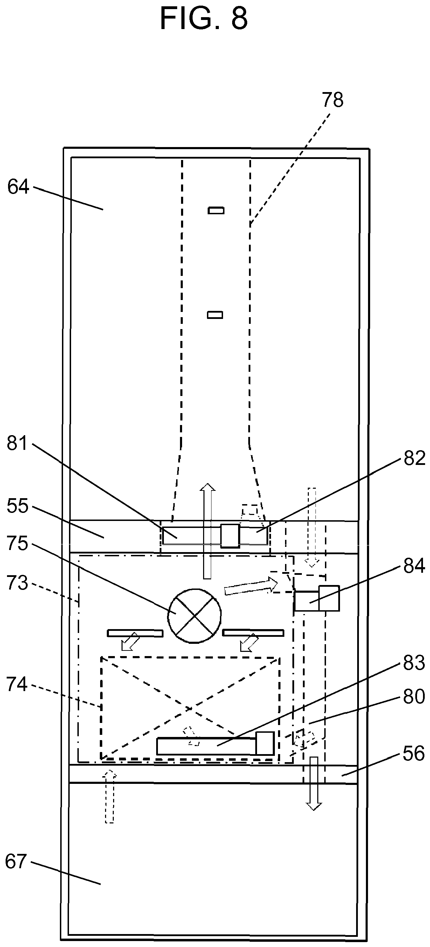

First, an entire configuration of a refrigerator will be described with reference to FIGS. 5 to 8. FIG. 5 is a front view of the refrigerator. FIG. 6 is a front view showing an inside of the refrigerator. FIG. 7 is a cross-sectional view of the refrigerator. FIG. 8 is a diagram for explaining an arrangement of dampers provided in the refrigerator.

In FIGS 5 to 8, refrigerator 51 is configured so that the front is openable. Refrigerator 51 is configured with metallic external box 52, hard resinous inner box 53, and foaming heat insulating material 54 foamed and filled between external box 52 and inner box 53. Refrigerator 51 has a plurality of storerooms 90 partitioned and formed by partition plates 55 and 56 and the like.

In addition, each storeroom 90 of refrigerator 51 is configured to be openable by revolving door 57 that employs the same insulating constitution as refrigerator 51 or drawer-type doors 58, 59, 60, and 61.

Storerooms 90 formed inside refrigerator 51 include uppermost refrigeration chamber 64, switching chamber 65 capable of switching temperature zones provided below refrigeration chamber 64, ice-making chamber 66 provided beside switching chamber 65, and freezing chamber 68 provided between switching chamber 65, ice-making chamber 66 and lowermost vegetable chamber 67.

Refrigeration chamber 64 includes a plurality of shelf plates 70 in a detachable manner, and a space inside the refrigeration chamber is partitioned into a plurality of upper and lower spaces. Refrigeration chamber 64 further includes low-temperature chamber 69 at a lower portion. Low-temperature chamber 69 is storeroom 90 adjusted to a higher temperature than that in freezing chamber 68 and to a lower temperature than that in refrigeration chamber 64. Low-temperature chamber 69 is, for example, a partial freezer chamber (hereinafter, a partial chamber) adjusted to temperatures of -2°C to 3°C suitable for partial freeze storage. Alternatively, low-temperature chamber 69 is a chilled chamber adjusted to temperatures higher than those in the partial chamber by about 1°C.

Ice-making chamber 66 is provided with an automatic ice maker and if water poured into an ice-making tray of the automatic ice maker has frozen, the ice is automatically discharged into the ice-making chamber.

Cooling chamber 73 is provided at a rear side of freezing chamber 68. In cooling chamber 73, cooler 74 that generates cold air and cooling fan 75 that supplies the cold air to each chamber are installed. Further, defrosting means 76 (hereinafter, referred to as glass tube heater) configured with a glass tube heater and the like is provided below cooler 74.

In cooler 74, compressor 77 provided at a rear side of an upper portion of refrigerator 51, a condenser (not shown), a heat radiation pipe for heat radiation (not shown), and a capillary tube (not shown) are annularly connected to configure a freezing cycle, and cooling is performed by circulation of a cooling medium compressed by compressor 77.

Cooling fan 75 is provided above cooler 74 and supplies cold air into refrigeration chamber 64, freezing chamber 68, vegetable chamber 67, and the like through refrigeration chamber duct 78, freezing chamber duct 79, and vegetable chamber duct 80 that continue to its downstream side to cool each of these chambers.

Refrigeration chamber duct 78 includes refrigeration chamber damper 81 that controls a supply amount of cold air from cooling chamber 73 to refrigeration chamber 64 by opening and closing. Refrigeration chamber duct 78 further includes low-temperature chamber damper 82 that controls a supply amount of cold air from cooling chamber 73 to low-temperature chamber 69 by opening and closing. Refrigeration chamber damper 81 and low-temperature chamber damper 82 may be an integrated double damper.

Freezing chamber duct 79 includes freezing chamber damper 83 that controls a supply amount of cold air from cooling chamber 73 to freezing chamber 68 by opening and closing. Freezing chamber damper 83 is provided so that its lower portion is positioned above glass tube heater 76 and is provided so as to be reliably in contact with warm cold air heated with glass tube heater 76 at the time of defrosting operation to be described below. In addition, vegetable chamber duct 80 includes vegetable chamber damper 84 that controls a supply amount of cold air from cooling chamber 73 to vegetable chamber 67 by opening and closing. Vegetable chamber damper 84 is provided at almost the same height position as cooling fan 75.

Refrigeration chamber 64 or refrigeration chamber duct 78 includes refrigeration chamber temperature sensor 103a for detecting a temperature of refrigeration chamber 64. Low-temperature chamber 69 or refrigeration chamber duct 78 includes low-temperature chamber temperature sensor 103b for detecting a temperature of low-temperature chamber 69. Freezing chamber 68 or freezing chamber duct 79 includes freezing chamber temperature sensor 103c for detecting a temperature of freezing chamber 68. Vegetable chamber 67 or vegetable chamber duct 80 includes vegetable chamber temperature sensor 103d for detecting a temperature of vegetable chamber 67. Further, refrigerator 51 includes a switching chamber temperature sensor for detecting a temperature of switching chamber 65 and an ice-making chamber temperature sensor for detecting a temperature of ice-making chamber 66.

Control unit 101 controls opening and closing of each of refrigeration chamber damper 81, low-temperature chamber damper 82, freezing chamber damper 83, and vegetable chamber damper 84 according to the detected temperatures of refrigeration chamber temperature sensor 103a, low-temperature chamber temperature sensor 103b, freezing chamber temperature sensor 103c, and vegetable chamber temperature sensor 103d.

Refrigerator 51 includes defrosting temperature sensor 103e for detecting a temperature of cooler 74 in cooler 74 or near cooler 74.

Control unit 101, when the detected temperature of defrosting temperature sensor 103e is not more than a predetermined temperature or the drive time of compressor 77 is not less than a predetermined time, feeds current to glass tube heater 76 to start a defrosting operation of defrosting cooler 74. Control unit 101, when the detected temperature of defrosting temperature sensor 103e is not less than a predetermined temperature, stops feeding of current to glass tube heater 76 to terminate the defrosting operation.

Refrigerator 51 further includes ambient temperature sensor 103f for detecting a temperature outside the storeroom, that is, a temperature of a room in which the refrigerator is installed.

Refrigerator 51 includes refrigeration chamber door opening/closing sensor 103g for detecting opening/closing of door 57 of refrigeration chamber 64. Refrigerator 51 includes freezing chamber door opening/closing sensor 103h for detecting opening/closing of door 61 of freezing chamber 68. Refrigerator 51 may include a switching chamber door opening/closing sensor for detecting opening/closing of door 59 of switching chamber 65, an ice-making chamber door opening/closing sensor for detecting opening/closing of door 58 of ice-making chamber 66, and a vegetable chamber door opening/closing sensor for detecting opening/closing of door 60 of vegetable chamber 67. For the door opening/closing sensor, a push-type contact switch or a magnetic sensor switch can be used.

Operations of the operating information provision system configured as above will be described.

In a case where a user desires to change setting of electrical equipment 10 or check operating information, the user first starts an application for user of portable terminal device 20. After that, the user holds portable terminal device 20 over electrical equipment 10 and thereby a short-range communication is performed between first communication unit 204 of portable terminal device 20 and communication unit 105 of electrical equipment 10. Thus, portable terminal device 20 acquires, from electrical equipment 10, for example, equipment information, such as a product name, a product number, and a serial number of electrical equipment 10 and operating information.

Operation information input to operation unit 202 of portable terminal device 20, equipment information acquired by portable terminal device 20, and operating information of electrical equipment 10 are transmitted from second communication unit 205 to server 30 via a network.

In server 30, reception unit 302 receives the operation information input to operation unit 202, equipment information of electrical equipment 10, and operating information of electrical equipment 10 that are transmitted from portable terminal device 20. Operating information storage unit 303a stores the received operating information in association with time information for each piece of equipment information.

In a case where the operation information input to operation unit 202 is an instruction to change setting of electrical equipment 10, provision unit 304 of server 30 transmits setting change screen information to portable terminal device 20 via communication unit 301. Portable terminal device 20 displays the setting change screen information on display unit 203 and prompts a user to input setting change information that is setting desired to be changed to operation unit 202. The setting change information input to operation unit 202 is transmitted to communication unit 105 of electrical equipment 10 via first communication unit 204. Thus, a user can change setting of electrical equipment 10 without holding operation unit 102 included in electrical equipment 10.

In a case where the operation information is an instruction to check operating information, provision unit 304 of server 30 transmits at least some of operating information to portable terminal device 20 via communication unit 301. Portable terminal device 20 displays operating information on display unit 203. Thus, a user can check operating information of electrical equipment 10.

As described above, the operation information input to operation unit 202 of portable terminal device 20, equipment information acquired by portable terminal device 20, and operating information of electrical equipment 10 are transmitted from second communication unit 205 to server 30 via a network.

Note that, communication unit 105 provided in electrical equipment 10 may perform a wireless communication with server 30 according to a wireless communication standard, such as LTE (Long Term Evolution). In this case, electrical equipment 10 can transmit equipment information and operating information to server 30 without via portable terminal device 20.

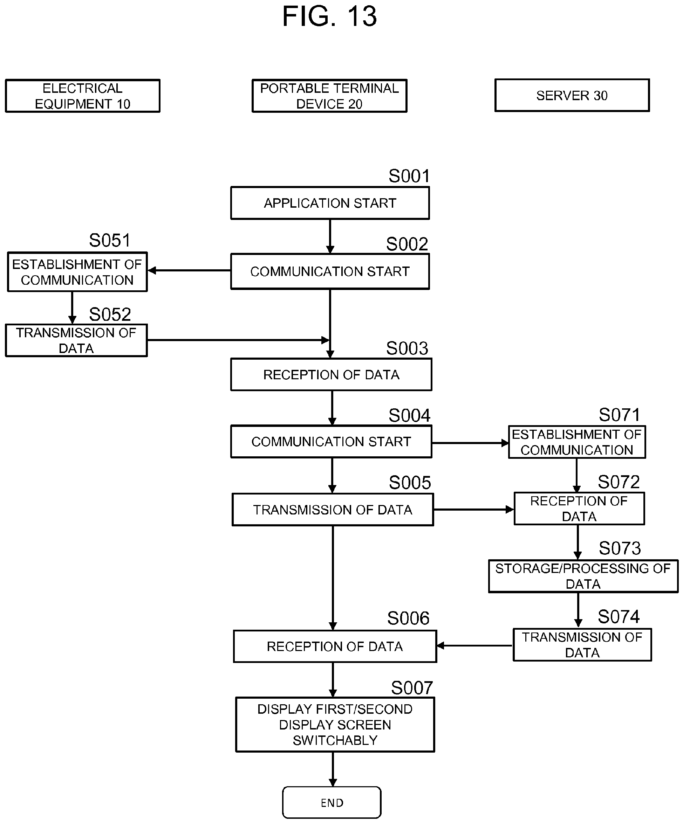

Next, processing procedure in a case where a user has judged that a failure occurred in electrical equipment 10 will be described. A user makes a phone call to a manufacturer or a call center of a sales store and talks about a failure handling method or requests a repair of an electrical equipment. The manufacturer or sales store having received the request for repair dispatches a repair worker to a user site. A processing sequence of an operating information provision system according to the present exemplary embodiment will be described below with reference to FIG. 13.

First, the repair worker starts an application for repair worker of portable terminal device 20 (step S001). Then, the repair worker holds portable terminal device 20 over electrical equipment 10 and thereby a short-range communication starts between first communication unit 204 of portable terminal device 20 and communication unit 105 of electrical equipment 10 (step S002). Electrical equipment 10, after establishing a communication with portable terminal device 20 (step S051), transmits data to portable terminal device 20 (step S052). Thus, portable terminal device 20 acquires, from electrical equipment 10, for example, equipment information, such as a product name, a product number, and a serial number of electrical equipment 10, operating information of electrical equipment 10, and failure information of electrical equipment 10 (step S003).

Next, portable terminal device 20 starts a communication with server 30 (step S004). Then, the equipment information, operating information, and failure information acquired by portable terminal device 20 are transmitted from second communication unit 205 to server 30 via a network (step S005).

Note that, in a case where communication unit 105 provided in electrical equipment 10 performs a wireless communication with server 30 according to a wireless communication standard, such as LTE, electrical equipment 10 can transmit equipment information, operating information, and failure information to server 30 without via portable terminal device 20. Hence, portable terminal device 20 may acquire only equipment information from electrical equipment 10 by a short-range communication.

In server 30, after the communication is established (step S071), reception unit 302 receives the equipment information, operating information, and failure information of electrical equipment 10 (step S072). Operating information storage unit 303a stores the received operating information in association with time information for each piece of equipment information (step S073). Failure information storage unit 303b stores the received failure information in association with time information for each piece of equipment information.

Note that, in a case where failure information is not stored in history storage unit 104, communication and storing regarding failure information may be omitted.

Further, analysis unit 305 estimates a failure cause (step S073).

Provision unit 304 transmits, to portable terminal device 20, at least one of equipment information, operating information, failure information, and repair history information of electrical equipment 10 and a failure cause estimated by analysis unit 305 (step S074). Then, portable terminal device 20 receives the above information from provision unit 304 (step S006). Portable terminal device 20 displays the information received from provision unit 304 on display unit 203 so that a first display screen (information screen for user) as a screen that displays outline information for presenting an outline of operating information to a user and a second display screen (information screen for repair worker) displaying analysis information that is information for a repair worker to analyze a failure cause are switchable (step S007). Specific examples of a screen displayed on display unit 203 will be described below.

The repair worker examines contents displayed on the second display screen (information screen for repair worker) to specify a failure cause. In addition, the repair worker shows the first display screen (information screen for user) to the user and explains at least one of whether or not electrical equipment 10 is in failure and a failure cause of electrical equipment 10.

Furthermore, in a case where electrical equipment 10 is in failure, the repair worker performs repair work, such as part replacement. In a case where repair of electrical equipment 10 has been completed, the repair worker, after starting the application for repair worker of portable terminal device 20, inputs repair information from operation unit 202 of portable terminal device 20. The repair information includes repair date, affiliation of repair worker, a person-in-charge code, a number of worksheet in which repair work contents were hand-written, error code information, a part number of the replaced part, a part name, and the like.

The repair information input to portable terminal device 20 is transmitted from second communication unit 205 to server 30 via a network. In server 30, reception unit 302 receives the repair information transmitted from portable terminal device 20. Repair history information storage unit 303a stores the received repair information in association with time information for each piece of equipment information.

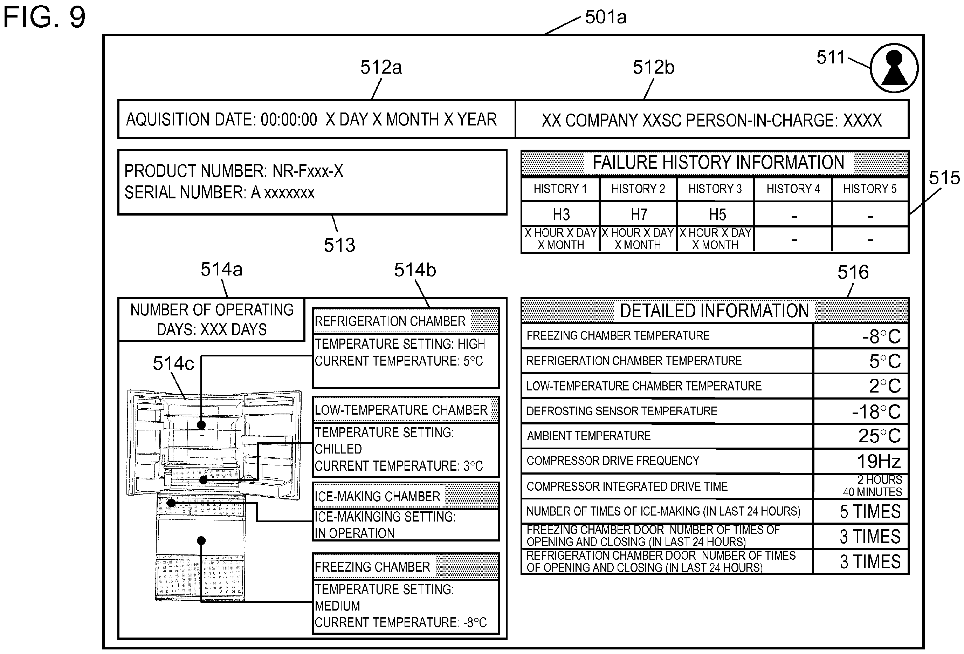

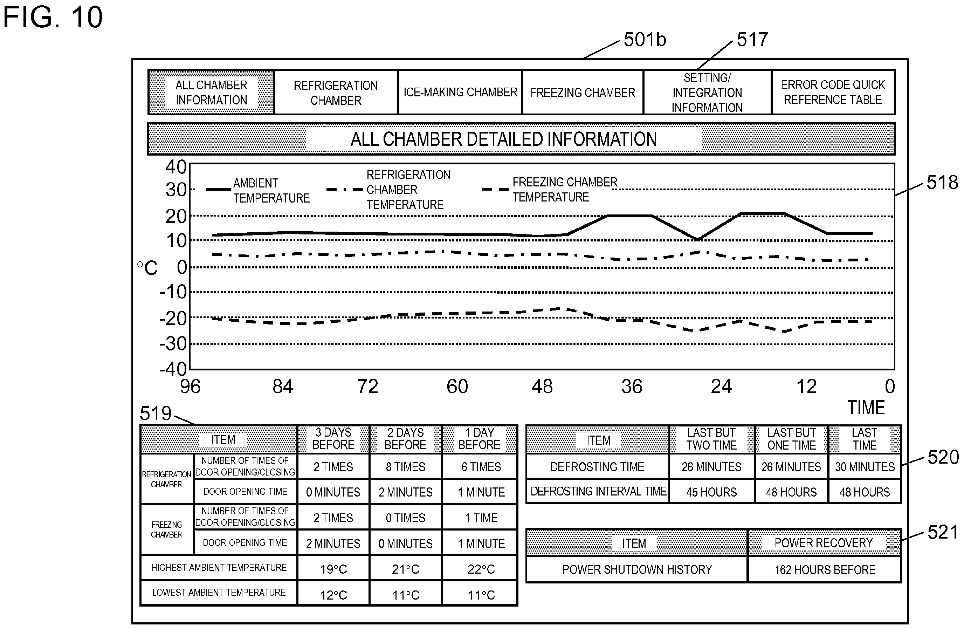

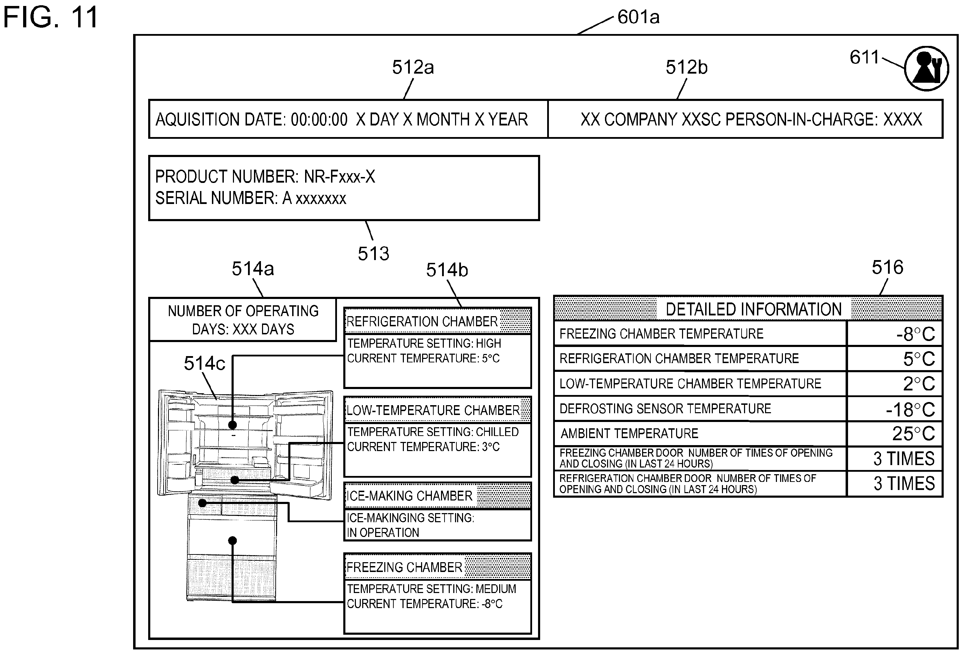

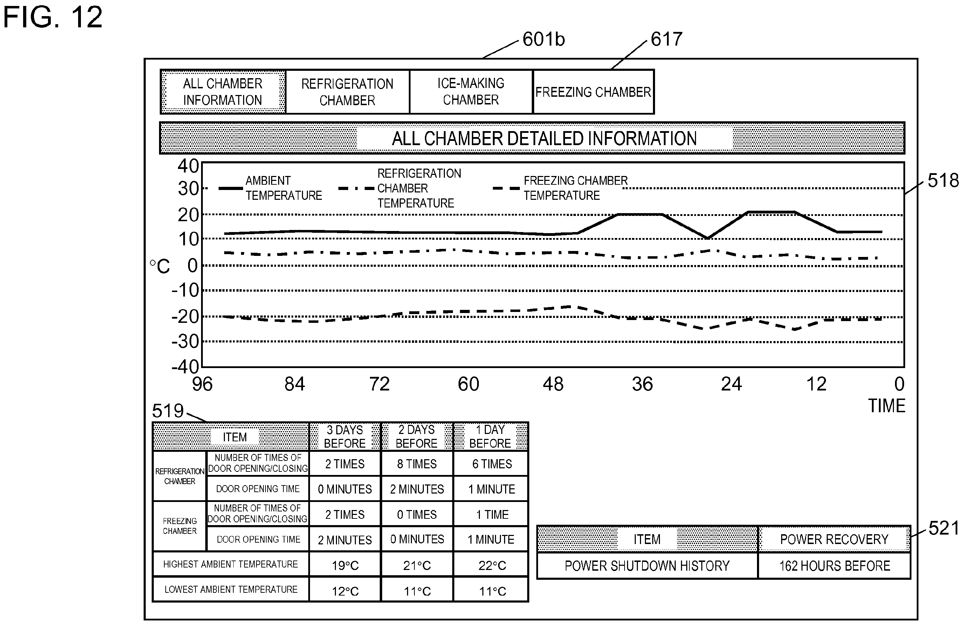

Next, specific examples of a screen displayed on display unit 203 of portable terminal device 20 will be described. With a case where electrical equipment 10 is a refrigerator taken as an example, among the second display screens (information screens for repair worker), a basic information screen is shown in FIG. 9 and a detailed information screen is shown in FIG. 10. Further, among the first display screens (information screens for user), a basic information screen is shown in FIG. 11 and a detailed information screen is shown in FIG. 12.

First, with reference to FIG. 9, basic information screen 501a of the second display screen (information screen for repair worker) will be described.

In basic information screen 501a of information for repair worker, at an uppermost right end, switching button 511 that switches screen display from the second display screen (information screen for repair worker) to the first display screen (information screen for user) is displayed. Further, below that, acquisition date information 512a as a date when portable terminal device 20 communicated with electrical equipment 10 and repair worker information 512b including affiliation of repair worker and a person-in-charge code that specifies individual repair worker are displayed.

Below acquisition date information 512a and repair worker information 512b, at the left side, equipment information 513 is displayed. Below equipment information 513, number-of-operating days information 514a of electrical equipment 10 and inside temperature information 514b that includes setting and current temperature for each storeroom are displayed. Note that the current temperature is a temperature at the date when portable terminal device 20 communicated with electrical equipment 10.

Inside temperature information 514b also includes schematic display 514c that shows an outline of where each storeroom is positioned in refrigerator 51. Thus, the repair worker can easily understand where the storeroom, the temperature of which is being displayed, is positioned.

Inside temperature information 514b more specifically displays which one of "high", "medium", and "low" the temperature is set to with operation unit 102 or portable terminal device 20 in refrigeration chamber 64 and the detected value of refrigeration chamber temperature sensor 103a. In low-temperature chamber 69, which one of "partial chamber" and "chilled chamber" the temperature is set to with operation unit 102 or portable terminal device 20 and the detected value of low-temperature chamber temperature sensor 103b are displayed. Further, in ice-making chamber 66, which one of "in operation" and "out of operation" the ice making is set to with operation unit 102 or portable terminal device 20 is displayed. Note that, the detected value of the ice-making chamber temperature sensor may be displayed together. In freezing chamber 68, which one of "high", "medium", and "low" the temperature is set to with operation unit 102 or portable terminal device 20 and the detected value of freezing chamber temperature sensor 103c are displayed.

Below acquisition date information 512a and repair worker information 512b, at the right side, failure history information 515 and detailed information 516 are displayed.

Failure history information 515 includes error code information for a predetermined number of times, for example, for the last five times among failure information stored in failure information storage unit 303b and time information when the error code information was generated.

Detailed information 516 displays the detected value of sensor 103 for each item. More specifically, detailed information 516 includes a detected value of each of freezing chamber temperature sensor 103c, refrigeration chamber temperature sensor 103a, low-temperature chamber temperature sensor 103b, defrosting temperature sensor 103e, and ambient temperature sensor 103f. Further, detailed information 516 may include detected values of vegetable chamber temperature sensor 103d, a switching chamber temperature sensor, and an ice-making chamber temperature sensor.

In addition, detailed information 516 includes a drive frequency of compressor 77, that is, a frequency output from drive unit 106 and an integrated drive time of compressor 77. Further, detailed information 516 includes a number of times of ice-making performed in a predetermined period, for example, within the last 24 hours. The number of times of ice-making is a number of times the automatic ice maker of ice-making chamber 66 has discharged ice.

In addition, detailed information 516 may include a number of times of opening and closing of door 61 of freezing chamber 68 in a predetermined period and a number of times of opening and closing of door 57 of refrigeration chamber 64 in a predetermined period. The number of times of opening and closing is a number of times refrigeration chamber door opening/closing sensor 103g or freezing chamber door opening/closing sensor 103h has detected "open" state of the target door.

In addition, basic information screen 501a of the second display screen (information screen for repair worker) may display a failure cause estimated by analysis unit 305.

Note that, basic information screen 501a of the second display screen (information screen for repair worker) may display a button for connecting to an address (URL) that specifies a server in which technical information, such as an instruction manual or a repair manual of electrical equipment 10 concerned, has been stored.

Next, with reference to FIG. 10, detailed information screen 501b of the second display screen (information screen for repair worker) will be described. Note that, basic information screen 501a and detailed information screen 501b are switched with the switching button (not shown).

Detailed information screen 501b of information for repair worker includes a plurality of display tabs. As shown in FIG. 10, each display tab is switchable by selection of any button of "all chamber information", "refrigeration chamber", "ice-making chamber", "freezing chamber", "setting/integration information", and "error code quick reference table", each of which is tab switching button 517 arranged at an uppermost position.

The display tab of "all chamber information" displays information of each storeroom in time series. The display tabs of "refrigeration chamber", "ice-making chamber", and "freezing chamber" display information of refrigeration chamber 64, ice-making chamber 66, and freezing chamber 68 in time series, respectively. The display tab of "setting/integration information" displays information on setting of each storeroom, an integrated drive time of compressor 77, or the like. The display tab of "error code quick reference table" displays an error code and explanation for the error code.

A method for display in time series in each display tab of "refrigeration chamber", "ice-making chamber", and "freezing chamber" is similar to a method for display in time series in a display tab of "all chamber information", and therefore the method for display in time series in the display tab of "all chamber information" will be described below.

Detailed information screen 501b of the second display screen (information screen for repair worker) displays, in the center, temperature variation in each storeroom, more specifically, variation in the detected values of refrigeration chamber temperature sensor 103a, variation in the detected values of freezing chamber temperature sensor 103c, and variation in the detected values of ambient temperature sensor 103f are displayed as temperature variation graph 518. Temperature variation graph 518 may include variation in the detected values of each of low-temperature chamber temperature sensor 103b, vegetable chamber temperature sensor 103d, an ice-making chamber temperature sensor, a switching chamber temperature sensor, and defrosting temperature sensor 103e.

Temperature variation graph 518 shows temperature in a vertical axis and time in a horizontal axis. The horizontal axis of temperature variation graph 518 shows a current time at the right end, goes back to the past as going to the left, and shows 96 hours before from the current time at the left end. Temperature variation graph 518 displays temperature variation from the current time until 48 hours before in almost right half and temperature variation from 48 hours before until 96 hours before in almost left half. In addition, from the current time until 48 hours before, data is displayed for every 30 minutes, and from 48 hours before until 96 hours before, data is displayed for every 6 hours. Thus, the repair worker can grasp at a glance a rough temperature variation for a long period of time until 96 hours before and a detailed temperature variation in the last 48 hours.

Note that, an interval of displaying data is set to 30 minutes from the current time until 48 hours before and set to 6 hours from 48 hours before until 96 hours before in order to have a good balance between acquisition of history information including a plurality of times of defrosting operations that is necessary for failure analysis and storage capacity of data.

At the left side below temperature variation graph 518, as door opening/closing information 519, a number of times of opening and closing of a door for each day for a predetermined number of days and an average time in which a target door is in an "open" state are displayed. Specifically, a number of times of opening and closing of door 61 of freezing chamber 68 and an average time in which door 61 was in the "open" state, as well as a number of times of opening and closing of door 57 of refrigeration chamber 64 and an average time in which door 57 was in the "open" state, for each day for the past 3 days are displayed. Door opening/closing information 519 includes the highest value and the lowest value of the detected values of ambient temperature sensor 103f in each day. Door opening/closing information 519 may include a number of times of having detected the "open" state of a target door of each of the switching chamber door opening/closing sensor, switching chamber door opening/closing sensor, and vegetable chamber door opening/closing sensor and an average time of having detected the "open" state.

At the right side below temperature variation graph 518, as defrosting time information 520, a defrosting time for each time for a predetermined number of times, for example, for the past 3 times and a defrosting interval time are displayed. The defrosting time is a time from the start of defrosting operation until the end of defrosting operation. The defrosting interval time is a time after the end of defrosting operation until the start of next defrosting operation.

In addition, below defrosting time information 520, as power shutdown history information 521, an elapsed time from supply of power to electrical equipment 10 is displayed.

Note that, in detailed information screen 501b of the second display screen (information screen for repair worker), a button for displaying descriptive text that explains contents of each display item may be displayed.

With reference to FIG. 11, basic information screen 601a of the first display screen (information screen for user) will be described. Basic information screen 601a of the first display screen (information screen for user) is obtained by omitting a part of display from basic information screen 501a of the information screen for repair worker. Hence, only points different from basic information screen 501a of the second display screen (information screen for repair worker) will be described.

In basic information screen 601a of the first display screen (information screen for user), at the uppermost right side, switching button 611 that switches screen display from the first display screen (information screen for user) to the second display screen (information screen for repair worker) is displayed.

In basic information screen 601a of the first display screen (information screen for user), failure history information 515 is not displayed. This is because for a user an error code is merely a code and the user cannot easily understand its content.

In addition, in basic information screen 601a of the first display screen (information screen for user), it is preferable that among detailed information 516, a drive frequency of compressor 77, an integrated drive time of compressor 77, and a number of times of ice-making performed within a predetermined period are not displayed. This is because a user cannot easily understand a relationship between the pieces of information and temperature variation in each storeroom.

Further, in basic information screen 601a of the first display screen (information screen for user), it is preferable not to display the failure cause estimated by analysis unit 305. This is because a user cannot easily understand a relationship between the failure cause and temperature variation in each storeroom.

With reference to FIG. 12, detailed information screen 601b of the first display screen (information screen for user) will be described. Detailed information screen 601b of the first display screen (information screen for user) is obtained by omitting a part of display from detailed information screen 501b of the second display screen (information screen for repair worker). Hence, only points different from detailed information screen 501b of the second display screen (information screen for repair worker) will be described.

In detailed information screen 601b of the first display screen (information screen for user), "error code quick reference table" is not displayed. This is because also in basic information screen 601a of the information screen for user, failure history information 515 including error code information is not displayed.

In detailed information screen 601b of the first display screen (information screen for user), it is preferable that "setting/integration information" is not displayed. This is because a user cannot easily understand a relationship between the integrated drive time of compressor 77 and temperature variation in each storeroom.

Further, in detailed information screen 601b of the first display screen (information screen for user), it is preferable not to display defrosting time information 520. This is because a user cannot easily understand a relationship between the pieces of information and temperature variation in each storeroom.

Further, it is preferable that power shutdown history information 521 is displayed also in detailed information screen 601b of the first display screen (information screen for user). This is because a user can easily understand that the temperature in each storeroom is not lowered by knowing how much time has elapsed from shutdown of power.

As described above, operating information of refrigerator 51 includes outline information and detailed information. The detailed information includes a part or whole of the outline information. The first display screen displays the outline information. The second display screen displays the detailed information. The outline information includes a history of detected values of a temperature detector that detects a temperature of storeroom 90 of refrigerator 51. The analysis information includes a history of detected values of a temperature detector and a history of operations of a functional component of refrigerator 51. Note that, the functional component means a "component having a function of playing a predetermined role in an electronic equipment".

According to the description of the present exemplary embodiment, the first display screen (information screen for user) displays items that a user can directly operate, that is, information on setting of each storeroom and opening and closing of doors, and items as outputs of electrical equipment 10, that is, information on temperature variation in each storeroom. The first display screen (information screen for user) does not display items that a user cannot directly operate, that is, the drive frequency of compressor 77, the integrated drive time of compressor 77, defrosting time information 520, and the like.

Hence, a repair worker can explain, to a user, at least one of whether or not electrical equipment 10 is in failure and a failure cause by presenting objective data without confusing a user by presenting excessive information. For example, in a case where the number of times of opening and closing of a door per day is large or the average time when the door was in the "open" state is long, the repair worker can explain, to the user, that the cause that the temperature in the storeroom will not drop is due to opening and closing of the door. Alternatively, in a case where the ambient temperature at the place in which electrical equipment 10 is installed is high, the repair worker can explain, to the user, that the cause that the temperature in the storeroom will not drop is due to installation environment.

Meanwhile, the second display screen (information screen for repair worker) displays items that a user can directly operate, items that a user cannot directly operate, and items as outputs of electrical equipment 10. Hence, the repair worker who is a specialist can analyze at least one of whether or not electrical equipment 10 is in failure and a failure cause.

Note that, in the present exemplary embodiment, it is described, but not limited thereto, that the basic information screen and detailed information screen of the second display screen (information screen for repair worker) and the basic information screen and detailed information screen of the first display screen (information screen for user) are displayed independently of each other on the display unit of portable terminal device 20 by the switching operation. For example, such a specification may be adopted that a plurality of screens are displayed on the display unit of portable terminal device 20, only a predetermined screen is displayed by the switching operation, and unnecessary screens are hidden with smoke or the like. Further, single screen and plural screen may be switchable by the switching operation.

### (Second exemplary embodiment)

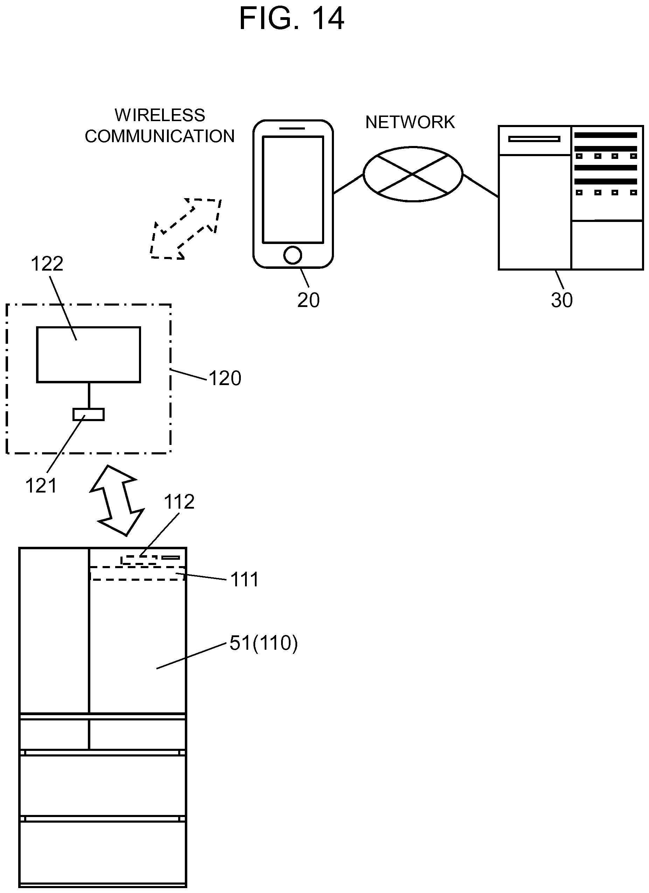

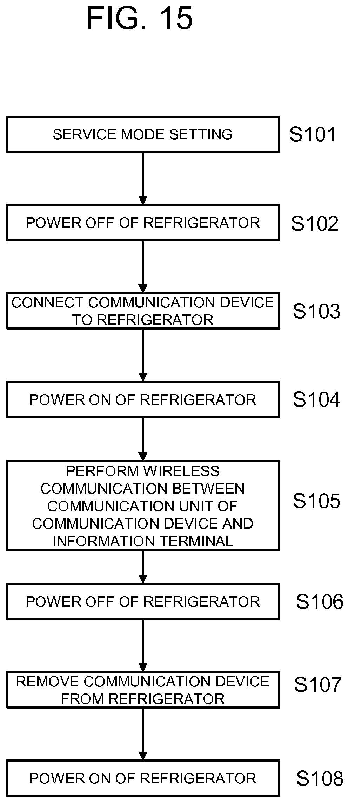

FIG. 14 is a diagram showing an entire configuration of a system in a second exemplary embodiment of the present disclosure. FIG. 15 is a flowchart showing a system connection operation in the same exemplary embodiment. The present exemplary embodiment relates to an operating information provision system for an electrical equipment having no communication unit 105 in the first exemplary embodiment. Note that, detailed explanation will be omitted for the same part as that of the first exemplary embodiment and different part or more detailed part will be described.

In FIG. 14, refrigerator 51 (electrical equipment 110) includes control substrate 111 at an upper part thereof. Control substrate 111 has connector 112. Communication device 120 has connector 121 connectable with connector 112 and communication unit 122.

Note that, connector 112 may be a dedicated component provided in control substrate 111 or may be a configuration of using in common a connector constituting an ordinary circuit that operates and controls refrigerator 51 and using only a connection terminal for wiring.

Next, processing in a case where a user has judged that a failure occurred in refrigerator 51 will be described. The user makes a phone call to a manufacturer or a call center of a sales store and talks about a failure handling method or requests a repair of an electrical equipment. The manufacturer or sales store having received the request for repair dispatches a repair worker to a user site.

In the following, processing procedure in a case where the dispatched repair worker uses an operating information provision system of the present exemplary embodiment will be described with reference to a flowchart of FIG. 15.

The repair worker operates an operation substrate of refrigerator 51 and sets a service mode (step S101). Then, the repair worker turns off the power of refrigerator 51 after a predetermined time, for example, after elapse of time necessary for storing operation history information in history storage unit 104 due to service mode setting (step S102). After that, the repair worker connects connector 121 of communication device 120 to connector 112 of control substrate 111 (step S103). After that, the repair worker turns on the power of refrigerator 51 (step S104).

Then, the repair worker performs wireless communication between communication unit 122 of communication device 120 and portable terminal device 20 (step S105), and uses the operating information provision system explained in the first exemplary embodiment to analyze the operation state or the failure cause from operation history information and give an appropriate explanation to the user. Further, the repair worker performs appropriate repair as necessary.

The repair worker, after finishing use of the operating information provision system, turns off the power of refrigerator 51 (step S106), removes connector 121 of communication device 120 from connector 112 of control substrate 111 (step S107), and turns on the power of refrigerator 51 (step S108).

With such a work, in the present exemplary embodiment, it becomes possible to use the operating information provision system also for a refrigerator having no communication unit 105 in the first exemplary embodiment. Therefore, the repair worker can analyze the operation state or the failure cause from operation history information and give an appropriate explanation to the user, and can perform appropriate repair as necessary.

In the present exemplary embodiment, the processing to turn off the power of refrigerator 51 before connecting connector 121 of communication device 120 to connector 112 of control substrate 111 is explained, but this is performed in order to reduce failures of refrigerator 51 and to enhance safety of the repair worker.

Note that, operation history display items are not limited to the items explained in the first exemplary embodiment, but may be added thereto, for example, as items for which both outline information and analysis information are displayed, setting information of refrigerator 51 (freezing chamber temperature, freezing chamber temperature, refrigeration chamber temperature, chilled/partial chamber temperature, ice-making stop setting, quick icing setting, rapid freezing setting), humidity information by a humidity sensor, and operation information of inside temperature adjusting function.

In addition, as items for which outline information is not displayed but only analysis information is displayed, opening/closing operation information of a damper that controls supply of cold air to each chamber, driving operation information of each fan, and driving operation information of each heater may be added.

In addition, information terminal device, operating information provision system, and operating information provision program explained in the first and second exemplary embodiments can be used as a communication tool between a repair worker and a user.

For example, portable terminal device 20 may further include output unit 206 that outputs at least one of a preliminarily recorded operation sound of electrical equipment 10, 110 and video image of installation environment or the like. Sound information includes an operation sound of a compressor, operation sounds during operation and when stopped, an operation sound of each fan, liquid of a cooling medium that flows in a pipe, a sound from an inside component due to rapid temperature variation when a door is opened or closed, and the like.

These are appropriately used in a communication with a user, and thereby the user can quantify a sound or a situation expressed with sensuous expression and these can be used as a tool for analyzing a cause of a sound that is pointed out as a failure and allowing a user to understand that it is within a normal range. In addition, these can be used as a tool for allowing a user to understand by a video image a relationship between a case where cooling is bad inside the refrigerator or the like and installation environment or use conditions, for securing a clearance around the refrigerator, and for reducing influence of heat source, such as a stove burner, and influence of insolation.

Further, portable terminal device 20 may include input unit 207 that records at least one of an operation sound of electrical equipment 10, 110 and video image of installation environment or the like. This makes it possible to keep, as records, recording of an actual operation sound or operating noise pointed out by a user and video images of installation environment, use conditions, and the like. Therefore, these can be effectively used for setting of appropriate standards for product development or the like as a reference of materials for analyzing a failure cause or determining a quality level for a user.

As describe above, the information terminal device according to the present disclosure includes a reception unit that receives, from a refrigerator, operating information having outline information and analysis information of the refrigerator, a display unit that switchably displays a first display screen for displaying the outline information and a second display screen for displaying the analysis information, and a switching unit of switching between the first display screen and the second display screen. The analysis information includes at least some of the outline information. The outline information includes a history of detected values of a temperature detector that is provided in the refrigerator and detects a temperature of a storeroom of the refrigerator. The analysis information includes the history of the detected values of the temperature detector and a history of operations of a functional component of the refrigerator.

Thus, as the outline information, items as the output of the electrical equipment are displayed, and therefore the user can understand at least one of whether or not electrical equipment 10 is in failure and a failure cause by objective data. On the other hand, the analysis information displays also items that the user cannot directly operate, and therefore the repair worker who is a specialist can perform detail analysis about at least one of whether or not the electrical equipment is in failure and a failure cause.

### INDUSTRIAL APPLICABILITY

The present disclosure can be utilized as an operating information provision system that specifies a failure cause of various electrical equipments and non-home electrical appliances, such as automobiles.

### REFERENCE MARKS IN THE DRAWINGS

10: electrical equipment
20: portable terminal device
30: server
51: refrigerator
52: external box
53: inner box
54: foaming heat insulating material
55, 56: partition plate
57, 58, 59, 60, 61: door
64: refrigeration chamber
65: switching chamber
66: ice-making chamber
67: vegetable chamber
68: freezing chamber
69: low-temperature chamber
70: shelf plate
73: cooling chamber
74: cooler
75: cooling fan
76: defrosting means (glass tube heater)
78: refrigeration chamber duct
79: freezing chamber duct
80: vegetable chamber duct
81: refrigeration chamber damper
82: low-temperature chamber damper
83: freezing chamber damper
84: vegetable chamber damper
90: storeroom
101: control unit
102: operation unit
103: sensor
103a: refrigeration chamber temperature sensor
103b: low-temperature chamber temperature sensor
103c: freezing chamber temperature sensor
103d: vegetable chamber temperature sensor
103e: defrosting temperature sensor
103f: ambient temperature sensor
103g: refrigeration chamber door opening/closing sensor
103h: freezing chamber door opening/closing sensor
104: history storage unit
105, 122: communication unit
106: drive unit
201: control unit
202: operation unit
203: display unit
204: first communication unit
205: second communication unit
206: output unit
207: input unit
301: communication unit
302: reception unit
303: storage unit
304: provision unit
305: analysis unit
501a, 601a: basic information screen
501b, 601b: detailed information screen
511, 611: switching button
512a: acquisition date information
512b: repair worker information
513: equipment information
514a: number-of-operating days information
514b: inside temperature information
514c: schematic display
515: failure history information
516: detailed information
517: tab switching button
518: temperature variation graph
519: door opening/closing information
520: defrosting time information
521: power shutdown history information

## Claims

1. An information terminal device, comprising:
a reception unit that receives, from a refrigerator, operating information having outline information and analysis information of the refrigerator;
a display unit that switchably displays a first display screen for displaying the outline information and a second display screen for displaying the analysis information; and
a switching unit that switches between the first display screen and the second display screen, wherein
the analysis information includes at least part of the outline information,
the outline information includes a history of detected values of a temperature detector that is disposed in the refrigerator and detects a temperature of a storeroom of the refrigerator, and
the analysis information includes the history of the detected values of the temperature detector and a history of operations of a functional component of the refrigerator.

2. The information terminal device according to claim 1, wherein the outline information further includes temperature setting information of the storeroom.

3. The information terminal device according to claim 1, wherein the analysis information further includes information on a defrosting operation of the refrigerator.

4. The information terminal device according to claim 1, wherein the analysis information further includes information on at least one of failure information and a repair history of the refrigerator.

5. The information terminal device according to claim 1, further comprising an input unit that records at least one of a sound and a video image of the refrigerator.

6. The information terminal device according to claim 1, further comprising an output unit that regenerates at least one of a sound and a video image of the refrigerator that have been recorded in advance.

7. An operating information provision system comprising:
an information terminal device according to any one of claims 1 to 6; and
a server capable of connecting to the information terminal device.

8. An operating information provision program for causing an arithmetic unit of an information terminal device including a reception unit that receives, from a refrigerator, operating information having outline information and analysis information of the refrigerator, and a display unit that switchably displays a first display screen for displaying the outline information and a second display screen for displaying the analysis information to execute a switching step of switching between the first display screen and the second display screen, wherein
the analysis information includes at least part of the outline information,
the outline information includes a history of detected values of a temperature detector that is disposed in the refrigerator and detects a temperature of a storeroom of the refrigerator, and
the analysis information includes the history of the detected values of the temperature detector and a history of operations of a functional component of the refrigerator.
